(19) Europäisches Patentamt
European Patent Office
Office européen des brevets

(11) **EP 1 345 031 A2**

(12) **EUROPÄISCHE PATENTANMELDUNG**

(43) Veröffentlichungstag:
**17.09.2003 Patentblatt 2003/38**

(51) Int Cl.7: **G01P 3/68**, B66F 9/075,
G05D 1/03, B65G 1/04

(21) Anmeldenummer: 03005677.4

(22) Anmeldetag: **13.03.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **16.03.2002 DE 10211779**

(71) Anmelder: **Leuze electronic GmbH + Co.
73277 Owen/Teck (DE)**

(72) Erfinder: **Köbel, Herbert
73277 Owen/Teck (DE)**

(74) Vertreter: **Ruckh, Rainer Gerhard, Dr.
Fabrikstrasse 18
73277 Owen/Teck (DE)**

(54) **Optoelektronische Vorrichtung**

(57) Die Erfindung betrifft eine optoelektronische Vorrichtung (1) zur Erfassung von Marken und weist einen Sendelichtstrahlen (8) emittierenden Sender (6), einen Empfangslichtstrahlen (12) empfangenden Empfänger (13), Mittel zur Führung der Sendelichtstrahlen (8) innerhalb eines Abtastbereichs (A) und eine Auswerteeinheit (5) zur Auswertung der am Ausgang des Empfängers (13) anstehenden Empfangssignale auf. Die zu erfassenden Marken bilden ein Positionsmaßsystem (16). Durch Erfassung von Marken des Positionsmaßsystems (16) zu zwei unterschiedlichen Zeitpunkten $t_1$, $t_2$ wird in der Auswerteeinheit (5) aus der innerhalb des Zeitintervalls $dt = t_2 - t_1$ registrierten Positionsänderung der optoelektronischen Vorrichtung (1) relativ zum Positionsmaßsystem (16) die Geschwindigkeit der optoelektronischen Vorrichtung (1) relativ zum Positionsmaßsystem (16) bestimmt.

**Fig. 4**

EP 1 345 031 A2

**Beschreibung**

Die Erfindung betrifft eine optoelektronische Vorrichtung gemäß dem Oberbegriff des Anspruchs 1.

Derartige optoelektronische Vorrichtungen werden üblicherweise zur Identifikation von Gegenständen eingesetzt. Die Gegenstände sind jeweils mit einem Barcode gekennzeichnet und werden beispielsweise auf einem Förderband transportiert. Die optoelektronische Vorrichtung ist stationär am Förderband so installiert, dass die einzelnen Barcodes nacheinander abgetastet und dabei dekodiert werden, wodurch die einzelnen Gegenstände erfasst werden.

Aus der DE 199 10 933 A1 ist eine Einrichtung bekannt, bei der derartige Vorrichtungen zur Positionierzwecken eingesetzt werden.

Diese Einrichtung dient zur Positionierung eines Fahrzeugs an einem stationären Gegenstand, wobei des Fahrzeug entlang einer vorgegebenen Bahn entlang des Gegenstands verfahrbar ist. An den Gegenständen sind in vorgegebenen Abständen Kodierungen aufweisende Marken angebracht, welche mittels der optoelektronischen Vorrichtung am Fahrzeug erfassbar sind. Zur Absolutortsbestimmung des Fahrzeuges werden während einer Referenzart die Kodierungen der Marken nacheinander erfasst und die dabei registrierten Messwerte als Referenzwerte abgespeichert. Während auf die Referenzfahrt folgender Fahrten des Fahrzeugs werden die Kodierungen der Marken zur Grobpositionierung des Fahrzeugs erfasst und mit den Referenzwerten verglichen. Zur Feinpositionierung des Fahrzeugs wird mittels der optoelektronischen Vorrichtung deren Lage relativ zu einer der Marken oder einer weiteren Zielmarke bestimmt.

Diese Einrichtung ermöglicht prinzipiell eine genaue Positionierung an einer vorgegebenen Sollposition. Voraussetzung hierfür ist, dass durch Vorgabe eines geeigneten Geschwindigkeitsprofils das Fahrzeug langsam auf die Sollposition zu bewegt wird. Nur dann ist gewährleistet, dass der Bremsvorgang des Fahrzeugs so steuerbar ist, dass das Fahrzeug an der Sollposition auch tatsächlich zum Halten kommt.

Zur Geschwindigkeitskontrolle können insbesondere externe Sensoren oder mechanische Geschwindigkeitskontrollvorrichtungen vorgesehen sein. Abgesehen davon, dass derartige Systeme einen erheblichen Kosten- und Installationsaufwand bedingen, muss zudem in der Steuerung des Fahrzeugs eine Koordination der eingelesenen Positionswerte, die in der optoelektronischen Vorrichtung generiert werden, und der Geschwindigkeitsdaten erfolgen.

Der Erfindung liegt die Aufgabe zu Grunde eine optoelektronische Vorrichtung der eingangs genannten Art auszubilden, welche einen erweiterten Funktionsumfang aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die optoelektronische Vorrichtung weist einen Sendelichtstrahlen emittierenden Sender, einen Empfangslichtstrahlen empfangenden Empfänger, Mittel zur Führung der Sendelichtstrahlen innerhalb eines Abtastbereichs und eine Auswerteeinheit zur Auswertung der am Ausgang des Empfängers anstehenden Empfangssignale auf. Die zu erfassenden Marken bilden ein Positionsmaßsystem. Durch Erfassung von Marken des Positionsmaßsystems zu zwei unterschiedlichen Zeitpunkten $t_1$, $t_2$ wird in der Auswerteeinheit aus der innerhalb des Zeitintervalls $dt = t_2 - t_1$ registrierten Positionsänderung der optoelektronischen Vorrichtung relativ zum Positionsmaßsystem die Geschwindigkeit der optoelektronischen Vorrichtung relativ zum Positionsmaßsystem bestimmt.

Der Grundgedanke der Erfindung besteht somit darin, die Abtastung der Marken eines Positionsmaßsystems nicht nur zur Positionsbestimmung sondern auch zur Geschwindigkeitsmessung zu verwenden.

Die optoelektronische Vorrichtung weist dabei vorzugsweise eine Schnittstelle auf, über welche sowohl die aktuellen Geschwindigkeitswerte als auch die Positionsmesswerte relativ zum Positionsmaßsystem synchron mit einer vorgegebenen Taktrate ausgegeben werden.

Die erfindungsgemäße optoelektronische Vorrichtung ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich einer stationär angeordneten optoelektronischen Vorrichtung bewegt werden. Durch die fortlaufende Erfassung der Marken des Positionsmaßsystems werden in der optoelektronischen Vorrichtung kontinuierlich die aktuellen Geschwindigkeits- und Positionsmesswerte ermittelt und an die Steuerung des Fahrzeuges übermittelt. In der Steuerung können diese Messwerte ohne weitere Auswertung und insbesondere ohne jeden Synchronisationsaufwand direkt zur Steuerung des Fahrzeuges verwendet werden. Insbesondere kann in der Steuerung die Einhaltung von vorgegebenen Geschwindigkeitsprofilen für das Fahrzeug fortlaufend kontrolliert werden. Zusammen mit den aktuellen Informationen über die Position des Fahrzeuges kann dieses reproduzierbar und punktgenau auf vorgegebene Sollpositionen eingefahren werden.

Die Geschwindigkeitsmessung basiert in einer ersten Ausführungsform der Erfindung auf einer Absolutorts-Positionsbestimmung. In diesem Fall wird zu zwei unterschiedlichen Zeitpunkten $t_1$ und $t_2$ durch Erfassung der Kodierungen der Marken des Positionsmaßsystems jeweils die Absolutposition der optoelektronischen Vorrichtung relativ zum Positionsmaßsystem bestimmt. Durch Bildung der Differenz der Absolutort-Messwerte und anschließendes Bilden des Quotienten dieses Differenzwertes mit dem Zeitintervall $dt = t_2 - t_1$

wird dann in der Auswerteeinheit die Geschwindigkeit der optoelektronischen Vorrichtung relativ zum Positionsmaßsystem berechnet.

In einer zweiten Ausführungsform der Erfindung basiert die Geschwindigkeitsmessung auf einer relativen Positionsmessung. In diesem Fall wird zu den Zeitpunkten $t_1$ und $t_2$ jeweils die relative Lage einer Marke des Positionsmaßsystems zu einem vorgegebenen Referenzpunkt innerhalb des Abtastbereiches ermittelt, das heißt es wird erfasst, wie weit sich eine Marke zwischen den Zeitpunkten $t_1$ und $t_2$ innerhalb des Abtastbereichs weiterbewegt hat.

Die Erfindung wird im Nachstehenden anhand der Zeichnungen erläutert. Es zeigen:

Figur 1: Schematische Darstellung des Aufbaus einer optoelektronischen Vorrichtung zur Erfassung von Marken.

Figur 2: Anordnung einer Vorrichtung gemäß Figur 1 auf einem Fahrzeug, welches entlang einer Fahrbahnbegrenzung mit einem Positionssystem verfahrbar ist.

Figur 3: Detaildarstellung des Positionsmaßsystems gemäß Figur 2.

Figur 4: Schematische Darstellung einer ersten Ausrührungsform der Geschwindigkeitsmessung mittels der optoelektronischen Vorrichtung gemäß Figur 1.

Figur 5: Schematische Darstellung einer zweiten Ausführungsform der Geschwindigkeitsmessung mittels der optoelektronischen Vorrichtung gemäß Figur 1.

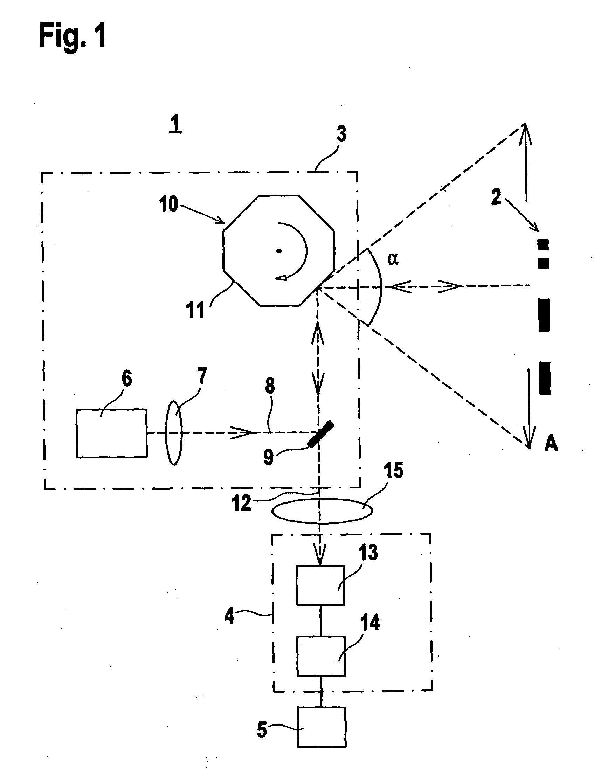

In Figur 1 ist der prinzipielle Aufbau einer optoelektronischen Vorrichtung 1 zur Erfassung von Marken dargestellt. Die optoelektronische Vorrichtung 1 ist im vorliegenden Beispiel als Barcodelesegerät ausgebildet. Entsprechend sind die Marken, die allgemein definierte Kontrastmuster aufweisen, im vorliegenden Fall als Barcodes 2 ausgebildet, welche aus einer Folge von dunklen und hellen Strichelementen definierter Länge und Breite bestehen.

Die optoelektronische Vorrichtung 1 besteht im Wesentlichen aus einer Sendeeinheit 3, einer Empfangseinheit 4 sowie einer Auswerteeinheit 5.

Die Sendeeinheit 3 besteht aus einem Sender 6, vorzugsweise einer Laserdiode, sowie aus einer dem Sender 6 vorgeordneten Sendeoptik 7. Die Sendeoptik 7 dient zur Fokussierung der vom Sender 6 emittierten Sendelichtstrahlen 8. Die fokussierten Sendelichtstrahlen 8 werden über einen Umlenkspiegel 9 auf eine Ablenkeinheit 10, die im vorliegenden Ausführungsbeispiel von einem rotierenden Polygonspiegelrad gebildet ist, geführt. Das Polygonspiegelrad weist eine vorgegebene Anzahl von identisch ausgebildeten Spiegelflächen 11 auf. Die Sendelichtstrahlen 8 werden an den Spiegelflächen 11 abgelenkt und von dort auf den zu detektierenden Barcode 2 geführt. Die Drehachse des Polygonspiegelrads ist senkrecht zur in Figur 1 dargestellten Äquatorialebene des Polygonspiegelrads angeordnet.

Die Sendelichtstrahlen 8 werden am Barcode 2 reflektiert und als Empfangslichtstrahlen 12 über das Polygonspiegelrad 11 zur Empfangseinheit 4 geführt. Die Empfangseinheit 4 besteht aus einem Empfänger 13 , in der die Empfangslichtstrahlen 12 in ein elektrisches Empfangssignal gewandelt werden. Der Empfänger 13 ist vorzugsweise von einer Photodiode gebildet. Zur Verstärkung der Empfangssignale am Ausgang des Empfängers 13 ist ein Verstärker 14 vorgesehen. Zur Fokussierung der Empfangslichtstrahlen 12 ist dem Empfänger 13 eine Empfangsoptik 15 vorgeschaltet.

Die am Ausgang des Empfängers 13 anstehende Empfangssignale werden der Auswerteeinheit 5 zugeführt. Die Auswerteeinheit 5 weist eine Schwellwerteinheit auf, mittels derer die Empfangssignale in binäre Signalfolgen gewandelt und anschließend zur Erfassung des Barcodes 2 dekodiert werden.

Im vorliegenden Ausführungsbeispiel weist das Polygonspiegelrad 11 acht Spiegelflächen 11 auf. Dementsprechend wird ein Öffnungswinkel des Barcodelesegeräts von 90° erhalten. Durch die Rotation des Polygonspiegelrades werden die an diesem reflektierten Sendelichtstrahlen 8 periodisch innerhalb eines Abtastbereichs A geführt. Während einer Abtastperiode werden die Sendelichtstrahlen 8 innerhalb des Öffnungswinkels entlang einer Abtastebene geführt, welche senkrecht zur Drehachse des Polygonspiegelrades 11 orientiert ist. Der Öffnungswinkel ist in Figur 1 mit $\alpha$ bezeichnet. Der Öffnungswinkel $\alpha$ definiert den Abtastbereich A, der mit den Sendelichtstrahlen 8 periodisch überstrichen wird.

Mit der optoelektronischen Vorrichtung 1 wird erfindungsgemäß ein Positionsmaßsystem 16 abgetastet, womit diese ein Positionsmesssystem bildet.

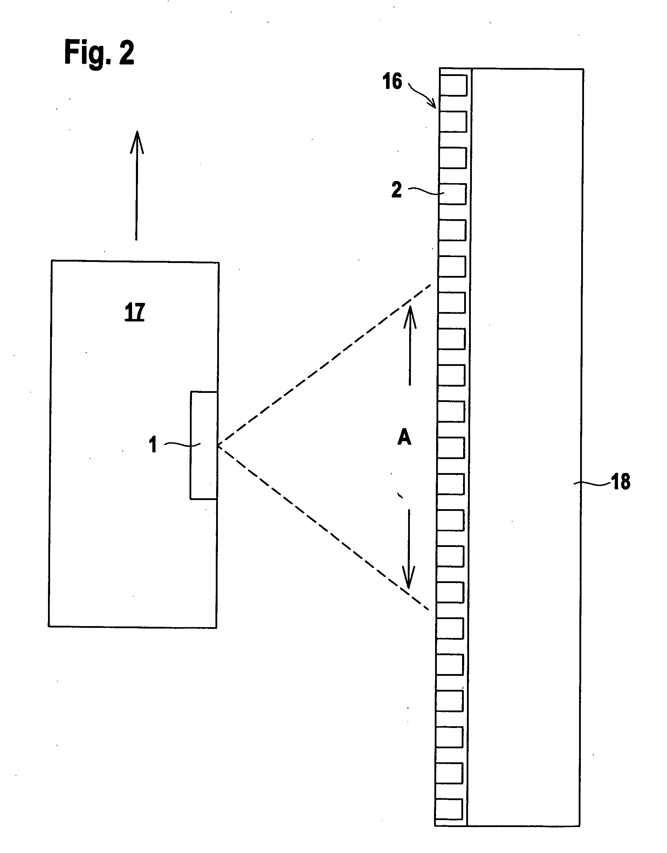

Ein typisches Anwendungsbeispiel eines derartigen Positionsmaßsystems 16 ist in Figur 2 dargestellt. Die optoelektronische Vorrichtung 1 ist auf einem Fahrzeug 17 montiert, welches im vorliegenden Ausführungsbeispiel von einem spurgeführten Verschiebewagen gebildet ist. Alternativ kann das Fahrzeug 17 von einer Hängebahn, einem Regalbediengerät, einem Kran oder dergleichen gebildet sein. Das Fahrzeug 17 wird mittels einer nicht dargestellten Steuerung gesteuert.

Die Fahrbahn ist seitlich von einer Fahrbahnbegrenzung 18 wie zum Beispiel einer Leitplanke begrenzt. Das Positionsmaßsystem 16 ist auf der der optoelektronischen Vorrichtung 1 zugewandten Frontseite der Fahrbahnbegrenzung 18 aufgebracht.

Im vorliegenden Ausführungsbeispiel ist das Positionsmaßsystem 16 als Maßband ausgebildet, welches auf eine Unterlage aufgeklebt werden kann. Damit kann bei dem Ausführungsbeispiel gemäß Figur 2 das Positionsmaßsystem 16 auch dann auf die Leitplanke aufgebracht werden, wenn diese in einer Kurve längs einer gekrümmten Bahn verläuft.

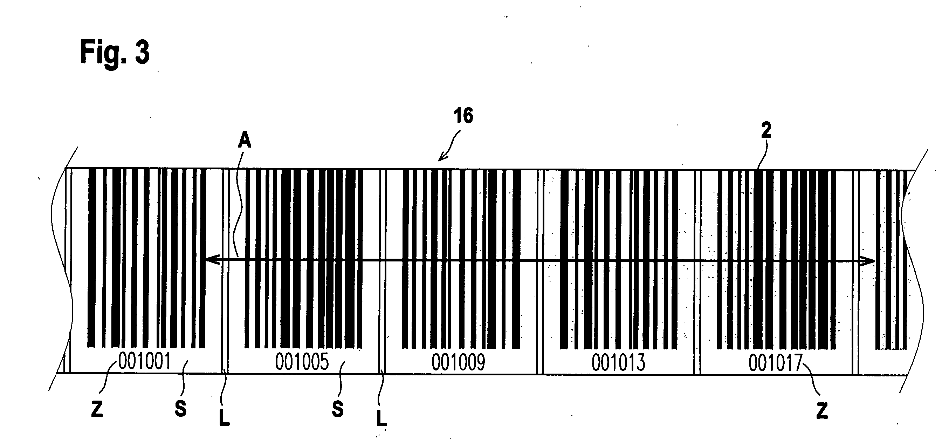

Wie insbesondere aus Figur 3 ersichtlich, besteht das Maßband aus einer Folge von in Längsrichtung des Positionsmaßstabs 16 hintereinander angeordneten Barcodes 2. Jeder Barcode 2 ist auf ein separates Segment S des Maßbandes aufgebracht, wobei benachbarte Segmente S jeweils durch eine Schneidelücke L getrennt sind. Die Segmente S weisen jeweils eine identische Breite auf. Die Breiten der Schneidelücken L zwischen den einzelnen Segmenten S sind ebenfalls konstant.

Die einzelnen Segmente S bilden somit identische Maßstabsmodule, so dass eine vorgegebene Länge des Maßbandes durch die Anzahl der Segmente S multipliziert mit der Breite der Segmente S und der Breite der jeweils anschließenden Schneidelücke L vorgegeben ist. Die Segmente S innerhalb des Maßbandes sind fortlaufend nummeriert, so dass jede Nummer eines Segmentes S die Position innerhalb des Maßbandes kodiert. Die Nummer eines Segments S ist in dem jeweiligen Barcode 2 kodiert und zudem unterhalb des Barcodes 2 als Ziffernfolge Z unterhalb des Barcodes 2 auf das Segment S aufgedruckt. Anhand der Ziffernfolge Z kann die jeweilige Nummer eines Segments S von dem Bedienpersonal abgelesen werden. Je nach Länge der Leitplanke wird das Maßband in der entsprechenden Länge zugeschnitten und auf die Leitplanke aufgeklebt.

Wie aus Figur 2 ersichtlich, verläuft die Längsachse des Maßbandes auf der Leitplanke in horizontaler Richtung und damit in Fahrtrichtung des Fahrzeuges 17. Die optoelektronische Vorrichtung 1 ist auf dem Fahrzeug 17 in der Höhe des Fahrzeugs 17 so montiert, so dass die Abtastebene auf der Höhe des Maßbandes liegt, wobei die optoelektronische Vorrichtung 1 so ausgerichtet wird, dass die Abtastebene im wesentlichen in horizontaler Richtung verläuft.

Wie aus Figur 3 ersichtlich, verläuft damit die Abtastebene der Sendelichtstrahlen 8 senkrecht zu den Längsachsen der Strichelemente der Barcodes 2 auf deren Maßstab. Abhängig von der Größe des Abtastbereichs A und des Leseabstandes liegt eine bestimmte Anzahl von Barcodes 2 innerhalb des Abtastbereichs A der optoelektronischen Vorrichtung 1.

Zur aktuellen Positionsbestimmung der optoelektronischen Vorrichtung 1 wird wenigstens einer der im Abtastbereich A liegenden Barcodes 2 ausgewertet. Dabei wird einerseits die Kodierung des Barcodes 2 erfasst, in welcher die Position des dem Barcode 2 zugeordneten Segments S innerhalb des Maßbandes enthalten ist. Zudem wird die Lage des Barcodes 2 innerhalb des Abtastbereichs A erfasst.

Hierzu ist in der optoelektronischen Vorrichtung ein Bezugspunkt definiert, der im vorliegenden Fall von der Mitte des Abtastbereiches A gebildet ist.

Zur Positionsbestimmung wird der dem Bezugspunkt am nächsten liegende Barcode 2 herangezogen. Dabei erfolgt zum einem die Dekodierung dieses Barcodes 2 und zum anderen die Bestimmung des Abstands des Barcodes 2 zum Bezugspunkt. Bei bekanntem Leseabstand der optoelektronischen Vorrichtung zum Maßband kann dieser Abstand in einen Distanzwert umgerechnet werden, um welchen der Barcode 2 versetzt zur Mittelachse des Abtastbereichs A liegt. Damit ist die Position der optoelektronischen Vorrichtung 1 relativ zum Maßband exakt bestimmt.

Der Leseabstand selbst wird vorzugsweise ebenfalls während der Abtastung des Maßbandes bestimmt. Bei bekannten und als Parameterwerten in der optoelektronischen Vorrichtung 1 abgespeicherten Geometriedaten des Maßbands, insbesondere der Muster und Abmessungen der Barcodes 2 sowie der Breiten der Segmente S, kann aus der Anzahl und den Lagen der Barcodes 2 innerhalb des Abtastbereichs A über trigonometrische Beziehungen der Leseabstand berechnet werden.

Insbesondere kann bei der Abtastung der Barcodes 2 auch erfasst werden, ob die Abtastebene gegenüber der Längsachse des Maßbandes geneigt verläuft. Durch Bestimmung des Neigungswinkels kann die Verkippung der Abtastebene bezüglich der Längsachse des Maßbandes bei der Bestimmung des Leseabstandes kompensiert werden.

Besonders vorteilhaft ist die optoelektronische Vorrichtung 1 so justiert, dass die Abtastebene exakt in Längsrichtung des Maßbandes verläuft. Hierzu emittiert der Sender 6 zweckmäßigerweise Sendelichtstrahlen 8 im sichtbaren Bereich, wodurch die Ausrichtung der optoelektronischen Vorrichtung 1 erheblich vereinfacht wird.

Die Positionsbestimmung in der optoelektronischen Vorrichtung 1 erfolgt kontinuierlich. Die so generierten Positionswerte werden über eine nicht dargestellte Schnittstelle der optoelektronischen Vorrichtung 1 als Ausgangssignale ausgegeben und in die Steuerung des Fahrzeugs 17 eingelesen.

Erfindungsgemäß wird in der optoelektronischen Vorrichtung 1 auch deren Geschwindigkeit relativ zum Positionsmaßsystem 16 bestimmt. Die in der optoelektronischen Vorrichtung 1 generierten Geschwindigkeitswerte werden ebenfalls als Ausgangssignale über die Schnittstelle ausgegeben und in die Steuerung des Fahrzeugs 17 eingelesen.

Das Auslesen der Geschwindigkeitswerte und der Positionswerte erfolgt vorzugsweise synchron mit einer vorgegebenen Taktrate. Damit liegen in der Steuerung des Fahrzeugs 17 zusätzlich zu den aktuellen Positionswerten auch die zugehörigen Geschwindigkeitswerte vor und können in diesen ohne Weiterverarbeitung direkt zur Fahrzeugsteuerung verwendet werden.

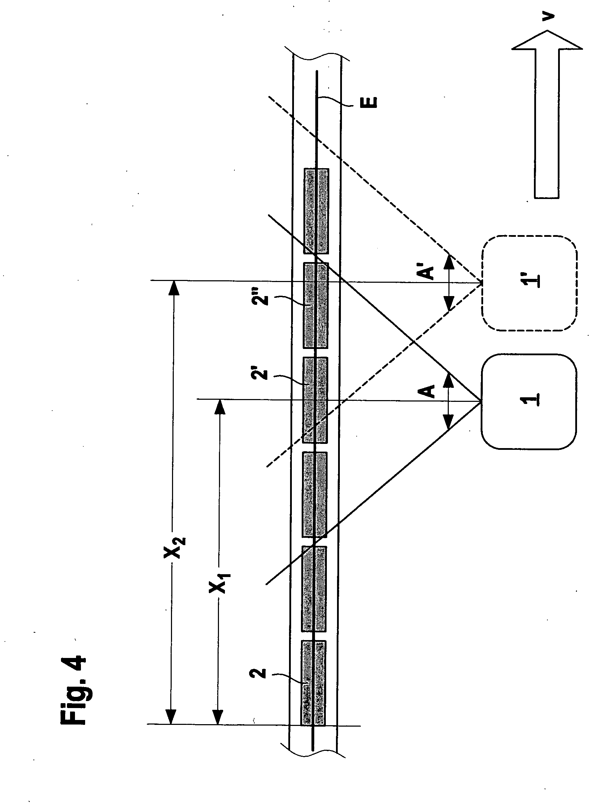

Figur 4 zeigt ein erstes Ausführungsbeispiel zur Durchführung der Geschwindigkeitsmessung. Die optoelektronische Vorrichtung 1 wird mit der Geschwindigkeit v in der dargestellten Bewegungsrichtung an dem Maßband vorbeibewegt. Die Distanz der optoelektronischen Vorrichtung 1 zum Maßband ist in vorliegendem Fall konstant. Die Ebene E, innerhalb derer der Abtastbereich A der optoelektronischen Vorrichtung 1 verläuft, fällt mit der Längsachse des Maßbandes zusammen.

In Figur 4 ist mit der Bezugsziffer 1 die optoelektronische Vorrichtung 1 in ihrer Position zu einem Zeitpunkt $t_1$ dargestellt. Mit der Bezugsziffer 1' ist dieselbe optoelektronische Vorrichtung 1 in ihrer Position zu einem späteren Zeitpunkt $t_2$ bezeichnet.

Entsprechend der Geschwindigkeit v der optoelektronischen Vorrichtung 1 wird mit dieser zum Zeitpunkt $t_1$ innerhalb des Abtastbereichs A ein erster Ausschnitt des Maßbandes erfasst, während zum Zeitpunkt $t_2$ innerhalb des Abtastbereichs A' ein zweiter Ausschnitt des Maßbandes erfasst wird.

Zu beiden Zeitpunkten $t_1$ und $t_2$ werden die aktuellen Positionswerte $x_1$ und $x_2$ der optoelektronischen Vorrichtung 1 bestimmt. Im vorliegenden Ausführungsbeispiel sind die Positionswerte $x_1$, $x_2$ von Absolut-Positionswerten gebildet. Dabei ist der jeweilige aktuelle Absolut-Positionswert $x_1$, $x_2$ als Strecke vom Anfang des Maßbandes zu einem definierten Bezugspunkt der optoelektronischen Vorrichtung 1 definiert. Anstelle des Anfangs des Maßbandes kann auch ein anderer definierter Punkt des Maßbandes als Ausgangspunkt gewählt werden. Dieser Bezugspunkt kann beispielsweise das Ende oder der Anfang des Abtastbereiches A, A' zum jeweiligen Zeitpunkt $t_1$, $t_2$ sein. Im vorliegenden Fall ist als Bezugspunkt die Mitte des Abtastbereiches A, A' gewählt.

Analog zu dem Ausführungsbeispiel gemäß Figur 3 erfolgt die Absolutortbestimmung dadurch, dass die Kodierung der Marke des Maßbandes erfasst wird, welche am nächsten zum Bezugspunkt innerhalb des Abtastbereiches A, A' liegt, wobei die Kodierung die Position der Marke innerhalb des Maßbandes enthält. Zudem wird der Abstand dieser Marke relativ zum Bezugspunkt bestimmt. Aus diesen beiden Teilinformationen ergibt sich als Absolut-Positionswert $x_1$, $x_2$ der Abstand vom Anfang des Maßbandes zu dem von der Mitte des Abtastbereiches A, A' gebildeten Bezugspunkt.

Wie aus Figur 1 ersichtlich wird zu dem Zeitpunkt $t_1$ der mit 2' bezeichnete Barcode zur Bestimmung des Absolut-Positionswertes $x_1$ herangezogen, da dieser am nächsten zum Bezugspunkt liegt. Das Zeitintervall dt = $t_2$ - $t_1$ ist im vorliegenden Fall so groß gewählt, dass zum Zeitpunkt $t_2$ der auf den Barcode 2' folgende Barcode 2" am nächsten zum Bezugspunkt der optoelektronischen Vorrichtung 1 liegt und daher zur Bestimmung der Absolut-Position $x_2$ verwendet wird.

Aus den ermittelten Positionswerten $x_1$, $x_2$ zu den Zeitpunkten $t_1$, $t_2$ erfolgt in der Auswerteeinheit 5 die Berechnung der aktuellen Geschwindigkeit v gemäß der Beziehung

$$v \; = \; (x_2 - x_1) \, / \, dt$$

$$= \; (x_2 - x_1) \, / \, (t_2 - t_1).$$

Bei dem Ausführungsbeispiel gemäß Figur 4 verläuft der Abtastbereich A, A' in einer Ebene E die mit der Längsachse des Maßbandes zusammenfällt. Bei einer Verkippung der Ebene E zur Längsachse des Maßbandes muss diese durch Umrechnungen in der Auswerteeinheit 5 bei der Bestimmung der Positionswerte berücksichtigt werden, damit die Fahrzeuggeschwindigkeit in Richtung des Maßbandes korrekt berechnet wird.

Das Zeitintervall dt, auf welches die Geschwindigkeitsmessung bezogen ist, kann generell eine konstante Größe sein. Alternativ stellt das Zeitintervall dt einen veränderbaren Parameterwert dar, wobei dieser insbesondere an die Höhe der Geschwindigkeit der optoelektronischen Vorrichtung 1 anpassbar ist. Dabei wird zur Erhöhung der Messgenauigkeit insbesondere bei sehr kleinen Geschwindigkeiten der optoelektronischen Vorrichtung 1 die Größe des Zeitintervalls entsprechend erhöht.

Dabei wird besonders vorteilhaft das Zeitintervall dt jeweils derart gewählt, dass dieses ein ganzzahliges Vielfaches der Abtastperiode der Ablenkeinheit 10 bildet. Damit wird erreicht, dass innerhalb des Zeitintervalls dt jeweils eine ganze Zahl von Abtastungen des Abtastbereiches A erfolgt.

Zur weiteren Erhöhung der Messgenauigkeit kann auch eine Mittelung über eine vorgegebene Anzahl von aufeinander folgend ermittelten Geschwindigkeitswerten erfolgen.

In einer vorteilhaften Weiterbildung kann in der Auswerteeinheit 5 der optoelektronischen Vorrichtung 1 aus den Geschwindigkeitswerten auch ein vorzugsweise binäres Schaltsignal und/oder ein binäres Warnsignal abgeleitet werden, welches über wenigstens einen nicht dargestellten Schaltausgang ausgebbar ist. Hierzu weist die Auswerteeinheit 5 eine nicht dargestellte Schnellwerteinheit auf, in welcher die Geschwindigkeitswerte mit vorgegebenen Schnellwerten bewertet werden. Durch diese Bewertung wird erfasst, ob die Geschwindigkeitswerte in vorgegebenen Geschwindigkeitsbereichen liegen oder nicht. Diese Informationen werden über den entsprechenden Schaltzustand des Schaltsignals und/oder Warnsignals über den oder die Schaltausgänge ausgegeben.

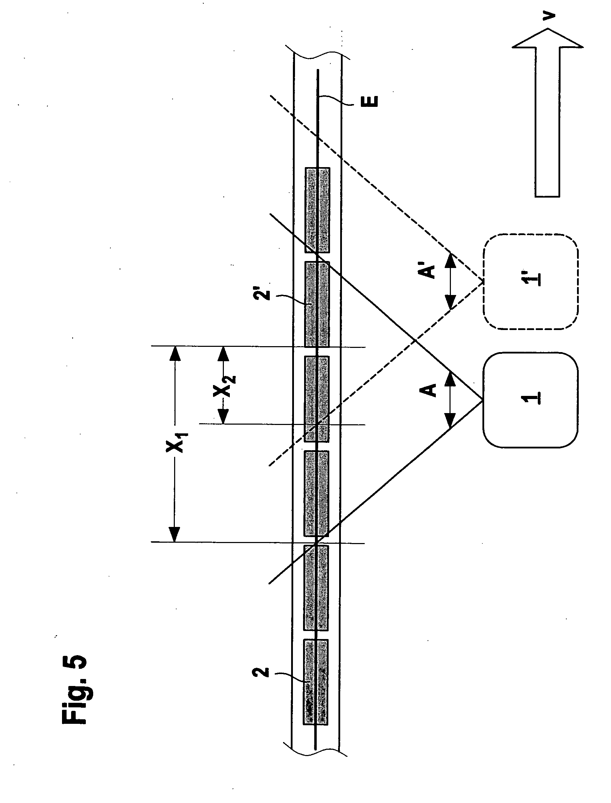

Figur 5 zeigt eine weitere Ausführungsform zur Geschwindigkeitsbestimmung. Die in Figur 5 dargestellte Anordnung entspricht weitgehend der Anordnung gemäß Figur 4. Im Unterschied zu dem Ausführungsbeispiel gemäß Figur 4 basiert in diesem Fall die Geschwindigkeitsmessung auf einer Relativ-Lagen-Bestimmung.

Hierzu wird sowohl zum Zeitpunkt $t_1$ als auch zum Zeitpunkt $t_2$ die Lage desselben, in Figur 5 mit der Bezugsziffer 2' gekennzeichneten Barcodes relativ zu einem Referenzpunkt des Abtastbereiches A, A' bestimmt. Bei diesem Verfahren wird der Codeinhalt des Barcodes 2' nicht zur Positionsbestimmung benötigt. Vielmehr muss der Barcode 2' nur von der optoelektronischen Vorrichtung identifiziert werden, damit gewährleistet ist, dass sich die Relativ-Lagen-Bestimmung zu den Zeitpunkten $t_1$ und $t_2$ auf denselben Barcode 2' bezieht. Hierzu ist insbesondere das Zeitintervall dt entsprechend klein zu wählen, so dass derselbe Barcode 2' zu beiden Zeitpunkten $t_1$ und $t_2$ innerhalb des Abtastbereiches A, A' liegt.

Der Referenzpunkt kann von der Mitte oder vom Ende des Abtastbereiches A, A' der optoelektronischen Vorrichtung 1 gebildet sein. Im vorliegenden Fall ist der Bezugspunkt vom Anfang des Abtastbereiches A, A' gebildet. Von diesem Bezugspunkt aus wird der Abstand zum linken Rand des zu vermessenden Barcodes 2' bestimmt, wobei dieser den Positionswert $x_1$, $x_2$ bildet, wie aus Figur 5 ersichtlich ist. Aus den so ermittelten Positionswerten erfolgt die Geschwindigkeitsbestimmung analog zum Ausführungsbeispiel gemäß Figur 4.

Leuze electronic GmbH + Co.
73277 Owen/Teck, DE

Bezugszeichenliste

| | |
|---|---|
| (1, 1') | Optoelektronische Vorrichtung |
| (2,2',2") | Barcode |
| (3) | Sendeeinheit |
| (4) | Empfangseinheit |
| (5) | Auswerteeinheit |
| (6) | Sender |
| (7) | Sendeoptik |
| (8) | Sendelichtstrahlen |
| (9) | Umlenkspiegel |
| (10) | Ablenkeinheit |
| (11) | Spiegelflächen |
| (12) | Empfangslichtstrahlen |
| (13) | Empfänger |
| (14) | Verstärker |
| (15) | Empfangsoptik |
| (16) | Positionsmaßsystem |
| (17) | Fahrzeug |
| (18) | Fahrbahnbegrenzung |
| (A, A') | Abtastbereich |
| (S) | Segment |
| (L) | Schneidelücke |
| (Z) | Ziffernfolge |

**Patentansprüche**

1. Optoelektronische Vorrichtung zur Erfassung von Marken mit einem Sendelichtstrahlen emittierenden Sender, einem Empfangslichtstrahlen empfangenden Empfänger, Mitteln zur Führung der Sendelichtstrahlen innerhalb eines Abtastbereichs und einer Auswerteeinheit zur Auswertung der am Ausgang des Empfängers anstehenden Empfangssignale, **dadurch gekennzeichnet, dass** die zu erfassenden Marken ein Positionsmaßsystem (16) bilden, und dass durch Erfassung von Marken des Positionsmaßsystems (16) zu zwei unterschiedlichen Zeitpunkten $t_1$, $t_2$ in der Auswerteeinheit (5) aus der innerhalb des Zeitintervalls $dt = t_2 - t_1$ registrierten Positionsänderung der optoelektronischen Vorrichtung (1) relativ zum Positionsmaßsystem (16) die Geschwindigkeit der optoelektronischen Vorrichtung (1) relativ zum Positionsmaßsystem (16) bestimmbar ist.

2. Optoelektronische Vorrichtung nach Anspruch 1, **dadurch gekennzeichnet, dass** das Zeitintervall dt, auf welches die Geschwindigkeitsmessung bezogen ist, konstant ist.

3. Optoelektronische Vorrichtung nach Anspruch 1, **dadurch gekennzeichnet, dass** das Zeitintervall dt, auf welches die Geschwindigkeitsmessung bezogen ist, in Abhängigkeit der aktuellen Geschwindigkeit der optoelektronischen Vorrichtung (1) veränderbar ist.

4. Optoelektronische Vorrichtung nach einem der Ansprüche 1 - 3, **dadurch gekennzeichnet, dass** diese eine Ablenkeinheit (10) aufweist, mittels derer die Sendelichtstrahlen (8) periodisch innerhalb vorgegebener Abtastperioden innerhalb des Abtastbereichs (A) geführt sind.

5. Optoelektronische Vorrichtung nach Anspruch 4, **dadurch gekennzeichnet, dass** das Zeitintervall dt ein ganzzahliges Vielfaches der Abtastperiode ist.

6. Optoelektronische Vorrichtung nach einem der Ansprüche 1 - 5, **dadurch gekennzeichnet, dass** in der Auswerteeinheit (5) eine Mittelung über eine vorgegebene Anzahl von aufeinander folgend ermittelten Geschwindigkeitswerten erfolgt.

7. Optoelektronische Vorrichtung nach einem der Ansprüche 1 - 6, **dadurch gekennzeichnet, dass** zur Durchführung der Geschwindigkeitsmessung die Differenz von zwei Absolutort-Positionswerten gebildet wird.

8. Optoelektronische Vorrichtung nach Anspruch 7, **dadurch gekennzeichnet, dass** zur Ermittlung eines Absolutort-Positionswertes die in einer Marke des Positionsmaßsystems (16) kodierte Position innerhalb des Positionsmaßsystems (16) erfasst wird, und dass deren Lage innerhalb des Abtastbereichs (A) bezüglich eines Bezugspunktes der optoelektronischen Vorrichtung (1) erfasst wird.

9. Optoelektronische Vorrichtung nach Anspruch 8, **dadurch gekennzeichnet, dass** der Bezugspunkt vom Anfang, von der Mitte oder vom Ende des Abtastbereichs (A) gebildet ist.

10. Optoelektronische Vorrichtung nach Anspruch 9, **dadurch gekennzeichnet, dass** die Lagedifferenz zwischen der Marke und dem Bezugspunkt in der Auswerteeinheit (5) in einen Distanzwert umgerechnet wird.

11. Optoelektronische Vorrichtung nach einem der Ansprüche 1 - 6, **dadurch gekennzeichnet, dass** zur Durchführung der Geschwindigkeitsmessung zu den Zeitpunkten $t_1$ und $t_2$ jeweils die Relativ-Lage einer Marke bezüglich eines Referenzpunktes innerhalb des Abtastbereichs (A) ermittelt wird, und dass aus der Differenz der ermittelten Relativ-Lagen der Marke die Geschwindigkeit ermittelt wird.

12. Optoelektronische Vorrichtung nach Anspruch 11, **dadurch gekennzeichnet, dass** der Referenz-Punkt vom Anfang, von der Mitte oder vom Ende des Abtastbereichs (A) gebildet ist.

13. Optoelektronische Vorrichtung nach einem der Ansprüche 1 - 12, **dadurch gekennzeichnet, dass** das Positionsmaßsystem (16) als Maßband mit einer Anordnung von hintereinander angeordneten Marken ausgebildet ist.

14. Optoelektronische Vorrichtung nach Anspruch 13, **dadurch gekennzeichnet, dass** das Maßband in Segmente (S) gleicher Breite unterteilt ist, wobei auf jedem Segment (S) eine Marke aufgebracht ist, in welcher deren Position innerhalb des Maßbandes kodiert ist.

15. Optoelektronische Vorrichtung nach einem der Ansprüche 13 oder 14, **dadurch gekennzeichnet, dass** diese auf einem Fahrzeug (17) angeordnet ist, welches an einer Fahrbahnbegrenzung (18) vorbeibewegt wird, an welcher das Maßband angeordnet ist.

16. Optoelektronische Vorrichtung nach Anspruch 15, **dadurch gekennzeichnet, dass** diese eine Schnittstelle aufweist, über welche die ermittelten Geschwindigkeitswerte mit einer vorgegebenen Taktrate in eine Steuerung des Fahrzeugs (17) einlesbar sind.

17. Optoelektronische Vorrichtung nach einem der Ansprüche 1 - 16, **dadurch gekennzeichnet, dass** in der Auswerteeinheit (5) durch Erfassung der Marken des Positionsmaßsystems (16) fortlaufend die Position der optoelektronischen Vorrichtung (1) relativ zum Positionsmaßsystem (16) ermittelt wird.

18. Optoelektronische Vorrichtung nach Anspruch 17, **dadurch gekennzeichnet, dass** über die Schnittstelle die ermittelten Positionswerte mit einer vorgegebenen Taktrate in die Steuerung des Fahrzeugs (17) einlesbar sind.

19. Optoelektronische Vorrichtung nach Anspruch 18, **dadurch gekennzeichnet, dass** über die Schnittstelle eine synchrone Ausgabe von Geschwindigkeits- und Positionswerten erfolgt.

20. Optoelektronische Vorrichtung nach einem der Ansprüche 1 - 19, **dadurch gekennzeichnet, dass** aus den ermittelten Geschwindigkeiten ein Schaltsignal und/oder ein Warnsignal ableitbar ist, welches über wenigstens einen Schaltausgang ausgebbar ist.

# Fig. 1

# Fig. 2

**Fig. 3**

Fig. 4

**Fig. 5**